Europäisches Patentamt

European Patent Office

Office européen des brevets

(19)

(11) Veröffentlichungsnummer: **0 014 436**
**B1**

(12)                  EUROPÄISCHE PATENTSCHRIFT

(45) Veröffentlichungstag der Patentschrift: **08.02.84**

(21) Anmeldenummer: **80100475.5**

(22) Anmeldetag: **30.01.80**

(51) Int. Cl.³: **G 03 B 41/16**

(54) Verfahren und Vorrichtung zur Identifizierung einer Filmaufnahme.

(30) Priorität: **31.01.79 GB 7903462**

(43) Veröffentlichungstag der Anmeldung:
**20.08.80 Patentblatt 80/17**

(45) Bekanntmachung des Hinweises auf die Patenterteilung:
**08.02.84 Patentblatt 84/6**

(84) Benannte Vertragsstaaten:
**CH DE FR GB IT**

(56) Entgegenhaltungen:
**GB - A - 1 307 940**
**US - A - 2 482 813**
**US - A - 2 482 815**

(73) Patentinhaber: **CIBA-GEIGY AG**
**Patentabteilung Postfach**
**CH-4002 Basel (CH)**

(72) Erfinder: **Neale, Denis Manktelow**
**23 Roden Street**
**Ilford, Essex (GB)**
Erfinder: **Kernthaler, John Ernest**
**69 Greenshaw**
**Brentwood, Essex (GB)**

(74) Vertreter: **Berg, Wilhelm, Dr. et al,**
**Dr. Berg, Dipl.-Ing. Stapf, Dipl.-Ing. Schwabe, Dr.**
**Dr. Sandmair Mauerkircherstrasse 45**
**D-8000 München 80 (DE)**

# Verfahren und Vorrichtung zur Identifizierung einer Filmaufnahme

Die Erfindung betrifft ein Verfahren und ein Gerät zum Aufzeichnen von Informationen zur Identifizierung auf Filmen in Kassetten.

Mit der stets zunehmenden Verwendung der Röntgenstrahluntersuchung von Patienten in Krankenhäusern wird es sehr wichtig, jede Röntgenaufnahme, die von dem Patienten erzeugt wird, korrekt zu identifizieren. Es wurden verschiedene Wege hierzu vorgeschlagen, darunter die Benutzung identifizierender Bleibuchstaben oder Zahlen, die auf dem Randbereich der Kassette, die den Röntgenfilm während der Belichtung hält, angeordnet werden. Dieses Verfahren und verschiedene andere Verfahren sind in der GB—A 1 307 940 beschrieben.

Der nützlichste Ansatzpunkt war jedoch, einen Schlitz entlang eines Bereiches eines Randes der Kassette zur Aufnahme eines flachen, steifen, zungenartigen Gliedes, auf dem eine Karte befestigt ist, die die Einzelheiten zur Identifizierung des Patienten anthält, wobei diese Zunge in Berührung mit dem Röntgenfilm ist, vorzusehen. Dieses Verfahren wurde zuerst in der US—A 2 505 562 beschrieben. Bei dieser Beschreibung wird keine spezielle Einrichtung zur Beleuchtung der Karte zur Identifizierung des Patienten vorgesehen, jedoch ist es bevorzugt, daß die auf der Karte benutzte Tinte bzw. Druckfarbe in hohem Maße lichtundurchlässig ist. Nachfolgend wurden unter Verwendung des gleichen Schlitz- und -Zunge-Systems verschiedene Verfahren vorgeschlagen, um die Karte auf der Zunge zu beleuchten, um eine angemessene bildweise Belichtung der Details auf der Karte auf dem Film sicherzustellen. In der GB—A 1 307 940 ist beispielsweise auf der steifen, flachen Zunge eine Phosphorschicht aufgebracht. Diese Phosphorschicht wird zum Phosphoreszieren gebracht und die die Information tragende Karte wird dann darüber angeordnet und die Zunge wird in die Kassette eingeführt.

Das Licht, das durch die Phosphorschicht ausgestrahlt wird und durch die die Information tragende Karte hindurchgeht, belichtet den Röntgenfilm, mit dem die Karte in Berührung ist, und bildet so ein latentes Bild der Identifizierungsinformation, wobie ein schwarzweißes Silberbild gebildet wird, wenn der Film in der üblichen Weise entwickelt wird. Es ist jedoch oft unbequem, eine lichtdurchlässige oder durchscheinende Karte mit Informationen zur Indentifizierung des Patienten der Größe, die auf die Phosphorschicht auf der flachen Zunge paßt, die in die Röntgenfilmkassette eingesetzt wird, zur Verfügung stellen zu müssen.

Durch die Erfindung soll ein Verfahren und ein Gerät zum Aufzeichnen von Identifizierungsinformation auf Filmen unter Benutzung einer Phosphorschicht, die auf einer flachen Zunge, die in eine Röntgenfilmkassette eingeführt werden kann, aufgebracht ist, geschaffen werden, das die Notwendigkeit beseitigt, eine Informationskarte, die mit der Zunge in die Kassette eingeführt wird, bereitzustellen.

Ausgehend von einem Verfahren zum photographischen Aufbringen von Identifizierungsinformationen auf einen Bereich eines Filmes in einer Kassette mit einem Schlitz an einem Rand zur Aufnahme eines flachen, steifen Zungenteils, das mit einer Schicht aus phosphoreszierendem Material beschichtet ist, welches phosphoreszierende Material nach Anregung Strahlung aussendet, für die der Film in der Kassette empfindlich ist, wird dies durch folgende Schritte erreicht: Abbilden einer Karte, die Identifizierungsinformation trägt, mittels UV-Licht auf die phosphoreszierende Schicht, solange, bis die im phosphoreszierenden Material gespeicherte Photoenergie ausreicht, den Film bildmäßig zu belichten, Einführen der Zunge in den Schlitz in der Kassette so, daß die Schicht aus phosphoreszierendem Material im wesentlichen in Berührung mit dem Film in der Kassette kommt, Belassen der Zunge in der Kassette für eine hinreichende Zeit, um den Film durch die vom phosphoreszierenden Material ausgesandte Strahlung bildmäßig zu belichten, und anschließendes Entfernen der Zunge aus dem Schlitz.

Vorzugsweise wird mindestens ein Teil der Energie vom phosphoreszierenden Material als Licht im Wellenlängenbereich 400 bis 500 nm abgestrahlt.

Das Verfahren der Erfindung umfaßt mindestens drei Wege, um den Phosphor anzuregen, um ihn Licht zur Belichtung des Filmes aussenden zu lassen. Bei der Methode (a) speichert das phosphoreszierende Material der gennanten Schicht, wenn diese bildmäßig belichtet wird, Photoenergie, sendet aber zur selben Zeit Licht im Wellenlängenbereich, für den der Film empfindlich ist (normalerweise blaues Licht), aus, so daß, wenn die Zunge in die Kassette eingeführt wird, die phosphoreszierende Schicht sofort beginnt, den Film zu belichten, um die Information darauf zu übertragen.

Vorzugsweise ist das dafür verwendete phosphoreszierende Material durch Kupfer aktiviertes Zinksulfit. Der Kupferanteil beträgt z.B. 0,01 Gew. % Kupfer. Das dar aufgeworfene Licht regt also die phosphoreszierende Schicht an und verursacht eine sofortige Aussendung von Energie als Licht.

Bei der Methode (b) speichert das phosphoreszierende Material der genannten Schicht, wenn diese bildmäßig belichtet wird, Photoenergie, wobei im wesentlichen keine Phosphoreszenz der Schicht ausgelöst wird, so daß, wenn die Zunge in die Kassette eingeführt wird, praktisch kein Licht vom phosphoreszierenden Material ausgesandt wird. Nach dem die Schicht aus phosphoreszierendem Material sich in Berührung mit dem Film befindet, wird Strahlung einer Wellenlänge, die länger als das langwellige Ende des Filmempfindlichkeitsbereiches ist, der Schicht aus phosphoreszierendem Material zugeführt, um sie zur bildmäßigen Aussendung von Licht im Wellenängenbereich anzuregen, in dem der Film empfindlich ist. Dies veranlaßt also die Bereiche des Phosphors, die während der Abbildung der Information auf die Phosphorschicht dem Licht ausgesetzt waren, hell zu glimmen und Licht in einem Wellenbereich auszusenden, auf den der Film anspricht. In der Praxis wird blaues Licht vom phosphoreszierenden Material ausgesandt, da die meisten Röntgenfilme blaulichtempfindlich sind, nicht aber empfindlich gegenüber Licht anderer Farbe.

Vorteilhaft ist das dadür verwendete phosphoreszierende Material mit Cer und Samarium aktiviertes Strontiumsulfid.

Bei der Methode (c) speichert das phosphoreszierende Material der genannten Schicht, wenn diese bildmäßig belichtet wird, Photoenergie, sendet aber zur selben Zeit Licht in einem Wellenbereich aus, in dem der Film praktisch unempfindlich ist. Nach dem die Zunge in die Kassette eingeführt und die Schicht aus phosphoreszierendem Material in Berührung mit dem Film ist, wird Strahlung einer Wellenlänge, die länger ist, als das langwellige Ende des Filmempfindlichkeitsbereiches, der Schicht aus phosphoreszierendem Material zugeführt, um sie zur bildmäßigen Aussendung von Licht im Wellenängenbereich anzuregen, in dem der Film empfindlich ist. Die Methode (c) ist demnach eine Mischform der Methoden (a) und (b), weil die Bereiche des phosphoreszierenden Materials, die nach der bildmäßigen Belichtung schon Licht aussenden (demgegenüber der Film jedoch verhältnismäßig unempfindlich ist), durch eine Strahlung veranlaßt werden, Licht auszusenden, demgegenüber der Film empfindlich ist. In der Praxis sendet das phosphoreszierende Material bei den am leichtesten erhältlichen Materialien Zunächst ein grünlichgelbes Licht aus, wenn es mit dem Information slicht beaufschlayt wird. Rotes Licht wird benutzt, um das phosphoreszierende Material anzuregen, wenn es in der Kassette ist und blaues Licht wird von ihm durch diese Anregung ausgesandt.

Vorteilhaft ist das dafür verwendete phosphoreszierende Material mit Gold aktiviertes Zinksulfid. Der Goldanteil ist klein und beträgt z.B. 0,01 Gew. % Gold.

Vorzugweise ist die Karte, die die Identifizierungsinformation trägt, lichtdurchlässig (durchsichtig oder durchscheinend), wobei das abbildende Licht durch sie auf die Schicht mit phosphoreszierendem Material projiziert wird, um eine bildmäßige Belichtung der Schicht zu bewirken. Dazu wird die Karte in Berührung mit der phosphoreszierenden Schicht angeordnet. Bei einer anderen Ausführungsform ist die Karte, die die Identifizierungsinformation trägt, lichtundurchlässig oder lichtundurchlässig hinterlegt, wobei das abbildende Licht von der Oberfläche der Karte über ein Linsensystem auf die Schicht mit phosphoreszierendem Material reflektiert wird. Somit wird es ermöglicht, daß die Information auf der Karte optisch auf die Phosphorschicht projiziert wird, wobei die Karte auch lichtdurchlässig sein kann. Nach einer anderen Ausführungsform wird in der Schicht aus phosphoreszierendem Material ein Bild der Karte in einer von der Größe der Karte abweichenden Dimension gespeichert, so daß eine Vergrößerung oder Verkleinerung des Bildes der Karte möglich ist.

Zur Ausführung des Verfahrens nach Patentanspruch 1 ist nach der Erfindung ein Gerät vorgesehen, das eine Belichtungseinrichtung aufweist, die auf die Schicht aus phosphoreszierendem Material ein Bild der Identifizierungskarte wirft und die eine Schalteinrichtung besitzt, um die Belichtungseinrichtung in Betrieb zu setzen.

Bei einem Gerät zur Ausführung der bevorzugten Methoden der Erfindung, d.h. den oben angegebenen Methoden (b) und (c), ist eine Einrichtung vorgesehen, um die Schicht aus phosphoreszierendem Material einer Strahlung einer Wellenlänge, die länger ist als das langwellige Ende des Filmempfindlichkeitsbereiches, auszusetzen.

Bei der Methode (a) der Erfindung muß, wenn die Phosphorschicht der Zunge schon Licht aussendet, für das der Film empfindlich ist, bevor die Zunge in die Kassette eingeführt wird, Sorgfalt darauf verwendet werden, die Zunge schnell in die Kassette einzusetzen, um zu verhindern, daß ein verwaschenes Bild gebildet wird. Vorzugsweise sollte die Zunge auch schnell entfernt werden. Bei den Methoden (b) und (c) müssen diese Vorsichtsmaßregeln jedoch nicht getroffen werden.

Die verhältnismäßig flache Zunge bei der Methode (a) kann jedes dünne, steife Material sein, z.B. eine dünne Platte aus Metall oder Kunststoff. Das bei den Methoden (b) und (c) benutzte Zungenteil ist jedoch vorzugsweise durchsichtig. Folglich kann es aus Glassein, aber bevorzugt ist es aus einem verhältnismäßig steifen Kunststoff, z.B. einem Acryl- oder Methacryl-Polymer oder einem Polyester. Am meisten bevorzugt ist jedoch der Kunststoff des Zungenteils für die Methoden (b) und (c) durchsichtiges Polycarbonat.

Jedes der üblichen Bindemittel, die benutzt werden, um phosphoreszierende Stoffe auf Leuchtschirmen zu binden, kann benutzt werden. Beispiele für geeignete Bindemittel sind Cellulosenitrat, Polyvinylbutyrat, Polyurethan und Alkylacrylat und Methacryl-Polymere, entweder einzeln oder in Mischung.

Die Phosphorschicht kann direkt auf die Oberfläche des Zungenteils aufgetragen werden, nachdem das Zungenteil präpariert wurde, vorzugsweise mit einer Zwischenschicht, damit eine Phosphorschicht daran haften kann. Die Phosphorschicht kann uber auch auf einem Film aus dünnem, durchsichtigen Material aufgebracht sein, z.B. Cellulosetriacetat, welches auf das Zungenteil laminiert wird, z.B. mit Hilfe eines Klebstoffs.

Geeignete Beschichtungsgewichte des Phosphors in der Phosphorschicht reichen von 0,5 g bis 10 g/dm².

Nachfolgend wird die Erfindung anhand bevorzugter Ausführungsbeispiele noch näher beschrieben.

Es zeigen:

Fig. 1 ein Gerät, um ein Bild auf einen Phosphorschirm zu werfen,

Fig. 2 ein weiteres Gerät, um ein Bild mittels optischer Projektion abzubilden, und

Fig. 3 eine bevorzugte Form eines Zungenteils, das an einer Strahlenquelle und einer Energieversorgung angebracht ist.

In allen Figuren bezeichnen die gleichen Bezugszeichen das gleiche Teil.

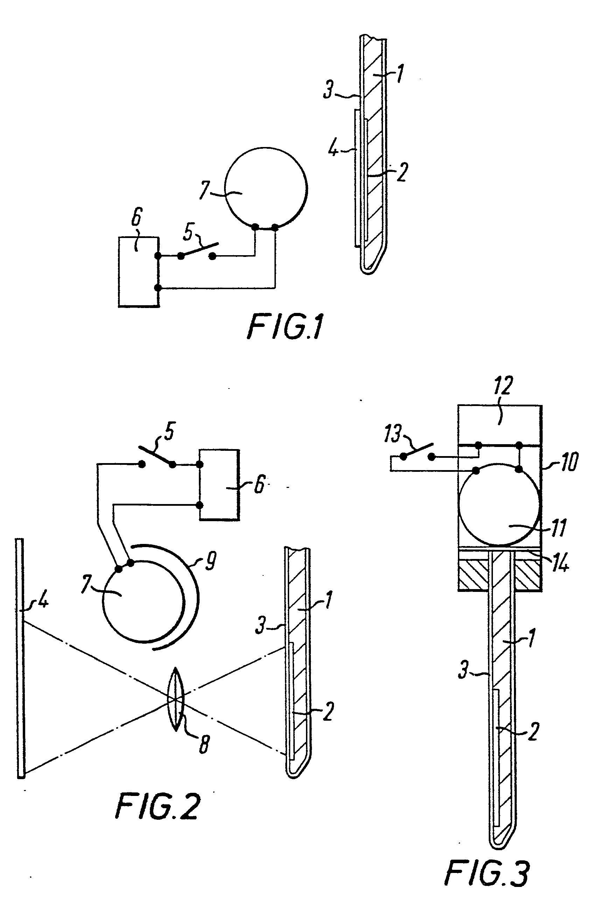

In Fig. 1 weist ein steifer Zungenteil einen ebenen Kern 1 auf, der eine Beschichtung 2 aus dem phosphoreszierenden Material Zinksulfid, aktiviert mit Kupfer trägt, die durch eine dünne, durchsichtige Folie 3 geschützt ist. Eine Patientenidentifizierungskarte (ID-Karte) 4 wird in Gegenüberlage zur Phosphor-Beschichtung in Berührung mit dem Zungenteil angeordnet, mit den Daten auf der Vorderseite der Karte gegenüber dem Phosphor. Ein Schalter 5 wird geschlossen, um eine Stromversorgung 6 mit einer Lampe 7 zu verbinden. Ultraviolette Strahlung aus der Lampe 7 geht durch die ID-Karte 4 hindurch, und, wo sie nicht durch maschinengeschriebene oder auf andere Weise darauf aufgebrachte Daten gehindert wird, regt die UV-Strahlung das phosphoreszierende Material an, Licht auszusenden, auf das der Röntgenfilm anspricht. Das Zungenteil wird dann von der ID-Karte getrennt und in das Ende einer Röntgenfilmkassette bekannter Art eingeführt. In der Kassette wird die Seite des Zungenteils, die die phosphoreszierende Beschichtung trägt, in Kontakt mit dem Film gebracht, und das phosphoreszierende Material sendet Licht nur dort aus, wo es durch die UV-Strahlung angeregt wurde, so daß ein Bild der Daten auf dem Film aufgezeichnet wird.

Die in Fig. 1 gezeigte Ausführungsform ist nicht für eine ID-Karte geeignet, die lichtundurchlässig ist, oder die auf der Rückseite Daten trägt, die nicht auf den Film übertragen werden sollen. Fig. 2 zeigt eine andere Ausführungsform, die diese Beschränkungen beseitigt und die es ermöglicht, das Bild der auf den Film übertragenen Daten zu vergrößern oder zu verkleinern.

In Fig. 2 ist die ID-Karte 4 vom Zungenteil getrennt und so angeordnet, daß eine Linse 8 die Ebene der Karte 4 auf die Phosphorbeschichtung 2 abbildet. Wenn der Schalter 5 geschlossen wird beleuchtet die Lampe 7 die Vorderseite der Karte 4 und ein Bild der darauf befindlichen Daten wird durch die Linse 8 auf das phosphoreszierende Material 2 abgebildet. Eine Abschirmung 9 hindert Licht von der Lampe 7 daran, das phosphoreszierende Material 2 direkt zu erreichen. Die Stellungen der phosphoreszierenden Beschichtung 2, der Linse 8 und der Karte 4 können so eingestellt werden, daß sie ein Bild erzeugen, das die gleiche Größe wie die ursprünglichen Daten hat, oder größer oder kleiner ist. Das vom phosphoreszierenden Material ausgesandte Licht fällt im wesentlichen exponentiell auf Null ab, näher bestimmt durch eine Zeitkonstante $T$ dergestalt, daß die Intensität der Lichtabstrahlung um einen Faktor $1/e$ ($e = 2,718$) in jedem Zeitraum von $T$ Sekunden abnimmt. Auf diese Weise fallen sowohl die Intensität der Lichtausstrahlung als auch die verbleibende gespeicherte Energie im phosphoreszierenden Material nach $nT$ Sekunden nach Einsetzung der Zunge in die Kassette auf $1/e^n$ der Werte, die vorlagen, als die Zunge zuerst eingesetzt wurde. Die dem Film zuteil gewordene Belichtung wird daher nicht in bedenklicher Weise durch die Zeit, die die Zunge in der Kassette verbleibt, beeinflußt, vorausgesetzt, daß diese Zeit nicht kleiner als $2T$ ($1/e^2 \approx 13,5$ %, $1/e^3 \approx 5$ %) ist. Auch weil bis dahin die Intensität gering ist, werden die aufgezeichneten Daten aufgrund der Bewegung des phosphoreszierenden Materials während des Herausziehens nicht wesentlich unscharf. Während des Einführens strahlt das phosphoreszierende Material jedoch mit hoher Intensität und es wird eine Unschärfe auftreten, wenn das Einsetzen nicht schnell durchgeführt wird, beispielsweise in $T/4$ Sekunden. Bei einer praktischen Anordnung, in der $T = 0,5$ Sekunden ist, beträgt die Zeit um Einsetzen der Zunge 0,1 Sekunden und die Zunge wird nach 1 Sekunde oder mehr herausgezogen.

Fig. 3 zeigt eine bevorzugte Ausführungsform der Erfindung, die geeignet ist, die oben beschriebenen Beschränkungen teilweise zu verringern, die sich bei der Benutzung eines phosphoreszierenden Materials ergeben, dessen Emission kontinuierlich und exponentiell auf Null abnimmt.

In Fig. 3 ist der ebene Kernbereich 1 des Zungenteils aus Polycarbonat. Die phosphoreszierende Beschichtung 2 wird direkt auf den Polycarbonatstreifen aufgebracht. Ein Gehäuse 10 am oberen Ende schließt die Strahlungsquelle 11 und die Stromquelle 12 ein. Das Schließen des Schalters 13 läßt die Quelle 11 Strahlung einer Wellenlänge größer als 600 nm durch einen Rotfilter 14 in den Kernbereich 1 und durch diesen zur phosphoreszierenden Beschichtung 2 senden. In dieser Ausführungsform ist das phosphoreszierende Material ein Zinksulfid, das mit Gold aktiviert wurde. Ein solches phosphoreszierendes Material hat die Eigenschaft, daß wenn es durch UV angeregt wird, es eine gelblich-grüne Phosphoreszenz mit verhältnismäßig großer Zeitkonstante leifert.

Wenn es jedoch Strahlung längerer Wellenlänge ausgesetzt wird, wird das phosphoreszierende Material angeregt, seine verbleibende gespeicherte Energie als blaues Licht und mit einer sehr verringerten Zeitkonstante abzustrahlen.

Bei der Verwendung kann das Gerät der Fig. 3 so benutzt werden, daß man ein Datenbild von einer ID-Karte entweder durch die in Fig. 1 oder durch die in Fig. 2 gezeigte Methode erhält. Die Zunge wird dann in die Filmkassette eingeführt. Da die Phosphor-Emission während dieses Vorgangs von verhältnismäßig geringer Intensität und ferner von einer Farbe ist, dergegenüber der Röntgenfilm verhältnismäßig unempfindlich ist, muß das Einführen des Zungenteils nicht mit großer Schnelligkeit durchgeführt werden, um ein Unscharfwerden des Bildes, das Nachfolgend auf dem Film festgelanten wird, zu verhindern. Sobald die Zunge gänzlich eingesetzt ist, wird der Schalter 13 geschlossen, um die Lampe 11 in Betrieb zu setzen. Rote und/oder infrarote Strahlung, die das phosphoreszierende Material durch den ebenen Kern 1 erreicht, regt das phosphoreszierende Material an, blaues Licht auszusenden, wodurch es auf dem Film ein latentes Bild der von der ID-Karte übertragenen Daten bildet. Der Röntgenfilm selbst sollte nicht für irgendeine Strahlung empfindlich sein, die direkt durch den Filter 14 und die Folie 3 hindurchgeht. Die Folie 3 kann vorteilhaft so beschaffen sein, daß sie infrarote Strahlung, der gegenüber ein Röntgenfilm empfindlich sein kann, absorbiert.

Da die im phosphoreszierenden Material gespeicherte Energie bis zur Anregung langsam abfällt, ermöglicht das Gerät der Fig. 3 viel breitere Geschwindigkeitsbereiche, innerhalb derer die einzelnen, Schritte durchgeführt werden bzw. viel breitere Zeitintervalle, die zwischen den Schritten zulässig sind.

In einer weiteren Ausführungsform hat das in Fig. 3 gezeigte Gerät eine phosphoreszierende Beschichtung 2, die Strontiumsulfid, das mit Samarium und Cer aktiviert wurde, aufweist. Ein solches phosphoreszierendes Material hat die Eigenschaft, Energie zu speichern, wenn es durch ultraviolette Strahlung angeregt wird, aber kein Licht zu emitteren, bis es durch infrarote Strahlung dazu veranlaßt wird. Die Verwendungsweise ist die gleiche wie die gerade in Verbindung mit Fig. 3 beschriebene und die Wahl der einen oder der anderen Art des phosphoreszierenden Materials wird durch die Vereinbarkeit der Zerfallskonstanten, der Wellenlängenbereiche der Emission und der Wellenlängenbereiche der Filmempfindlichkeit bestimmt.

Kassetten, die einen Schlitz zur Aufnahme einer Zunge mit Information, z.B. der Zunge 1 der Fig. 1 bis 3, aufweisen, sind im Stande der Technik bekannt und beispielsweise in GB—A 1 219 964, US—A 2 505 562, US—A 3 296 437 und GB—A 1 307 940 beschrieben.

**Patentansprüche**

1. Verfahren zum photographischen Aufbringen von Identifizierungsinformationen auf einen Bereich eines Films in einer Kassette mit einem Schlitz an einem Rand zur Aufnahme eines flachen, steifen Zungenteils, das mit einer Schicht aus phosphoreszierendem Material beschichtet ist, welches phosphoreszierende Material nach Angegung Strahlung aussendet, für die der Film in der Kassette empfindlich ist, gekennzeichnet durch folgende Schritte: Abbilden einer Karte, die Identifizierungsinformation trägt, mittels UV-Licht auf die phosphoreszierende Schicht so lange, bis die im phosphoreszierenden Material gespeicherte Photoenergie ausreicht, den Film bildmäßig zu belichten, Einführen der Zunge in den Schlitz in der Kassette so, daß die Schicht aus phosphoreszierendem Material im wesentlichen in Berührung mit dem Film in der Kassette kommt, Belassen der Zunge in der Kassette für eine hinreichende Zeit, um den Film durch die vom phosphoreszierenden Material ausgesandte Strahlung bildmäßig zu belichten, und anschließendes Entfernen der Zunge aus dem Schlitz.

2. Verfahren nach Anspruch 1, dadurch gekennzeichnet, daß mindestens ein Teil der Energie vom phosphoreszierenden Material als Licht im Wellenlängenbereich 400 bis 500 nm abgestrahlt wird.

3. Verfahren nach Anspruch 1 oder 2, dadurch gekennzeichnet, daß das phosphoreszierende Material der genannten Schicht, wenn diese bildmäßig belichtet wird, Photoenergie speichert, aber zur selben Zeit Licht im Wellenlängenbereich, für den der Film empfindlich ist, aussendet, so daß, wenn die Zunge in die Kassette eingeführt wird, die phosphoreszierende Schicht sofort beginnt, den Film zu belichten, um die Information darauf zu übertragen.

4. Verfahren nach Anspruch 3, dadurch gekennzeichnet, daß das phosphoreszierende Material durch Kupfer aktiviertes Zinksulfid ist.

5. Verfahren nach Anspruch 1 oder 2, dadurch gekennzeichnet, daß das phosphoreszierende Material der genannten Schicht, wenn diese bildmäßig belichtet wird, Photoenergie speichert, wobei im wesentlichen keine Phosphoreszenz der Schicht ausgelöst wird, so daß, wenn die Zunge in die Kassette eingeführt wird, praktisch kein Licht vom phosphoreszierenden Material ausgesandt wird, und daß dann, wenn die Schicht aus phosphoreszierendem Material sich in Berührung mit dem Film befindet, Strahlung einer Wellenlänge, die länger als das langwellige Ende des Filmempfindlichkeitsbereiches ist, der Schicht aus phosphoreszierendem Material zugeführt wird, um sie zur bildmäßigen Anwendung von Licht im Wellenlängenbereich anzuregen, in dem der Film empfindlich ist.

6. Verfahren nach Anspruch 5, dadurch gekennzeichnet, daß das phosphoreszierende Material mit Cer und Samarium aktiviertes Strontiumsulfid ist.

7. Verfahren nach Anspruch 1 oder 2, dadurch gekennzeichnet, daß das phosphoreszierende Material der genannten Schicht, wenn diese bildmäßig belichtet wird, Photoenergie speichert, aber zur gleichen Zeit Licht in einem Wellenlängenbereich aussendet, in dem der Film im wesentlichen unempfindlich ist, und daß dann, wenn die Zunge in die kassette eingeführt und die Schicht aus phosphoreszierendem Material in Berührung mit dem Film ist, Strahlung einer Wellenlänge, die länger ist als das langwellige Ende des Filmempfindlichkeitsbereiches, der Schicht aus phosphoreszierendem Material zugeführt wird, um sie anzuregen, und sie zur bildmäßigen Aussendung von Licht im Wellenlängenbereich anzuregen, in dem der Film empfindlich ist.

8. Verfahren nach Anspruch 7, dadurch gekennzeichnet, daß das phosphoreszierende Material mit Gold aktiviertes Zinksulfid ist.

9. Verfahren nach einem der Ansprüche 1 bis 8, dadurch gekennzeichnet, daß die Karte, die die Identifizierungsinformation trägt, lichtdurchlässig ist und daß das abbildende Licht durch sie auf die Schicht mit phosphoreszierendem Material projiziert wird, um eine bildmäßige Belichtung der Schicht zu bewirken.

10. Verfahren nach einem der Ansprüche 1 bis 8, dadurch gekennzeichnet, daß die Karte, die die Identifizierungsinformation trägt, lichtundurchlässig oder lichtundurchlässig hinterlegt ist, und daß das abbildende Licht von der Oberfläche der Karte über ein Linsensystem auf die Schicht mit phosphoreszierendem Material reflektiert wird.

11. Verfahren nach einem der Ansprüche 9 oder 10, dadurch gekennzeichnet, daß in der Schicht aus phosphoreszierendem Material ein Bild der Karte in einer von der Größe der Karte abweichenden Dimension gespeichert wird.

12. Gerät zur Ausführung des Verfahrens nach Patentanspruch 1, gekennzeichnet durch eine Belichtungseinrichtung, die auf die Schicht aus phosphoreszierendem Material ein Bild der Identifizierungskarte wirft, und eine Schalteinrichtung zum Inbetriebsetzen der Belichtungseinrichtung.

13. Gerät nach Anspruch 12, dadurch gekennzeichnet, daß die Belichtungseinrichtung die Schicht aus phosphoreszierendem Material durch die Karte hindurch belichtet.

14. Gerät nach Anspruch 12, dadurch gekennzeichnet, daß die Belichtungseinrichtung die Oberfläche der Karte beleuchtet und das von der Karte reflektierte Licht auf die Schicht aus phosphoreszierendem Material abgebildet wird.

15. Gerät nach einem der Ansprüche 12 bis 14, dadurch gekennzeichnet, daß das Zungenteil aus lichtdurchlässigem Material besteht.

16. Gerät nach Anspruch 15, dadurch gekennzeichnet, daß das Zungenteil aus lichtdurchlässigem Polycarbonat besteht.

17. Gerät nach einem der Anspruche 12 bis 16, dadurch gekennzeichnet, daß die eine Einrichtung vorgesehen ist, um die Schicht aus phosphoreszierendem Material einer Strahlung einer Wellenlänge, die länger ist als das langwellige Ende des Filmempfindlichkeitsbereiches, auszusetzen.

**Claims**

1. Method of photographically imprinting identification information onto a portion of a film in a cassette having a slot on one edge for receiving a flat stiff tongue member which is coated with a layer of phosphorescent material, which phosphorescent material after excitation emits radiation to which the film in the cassette is sensitive, characterized by the following steps: casting an image of a card carrying identification information by means of UV light onto the phosphorescent layer for sufficient time until the photo-energy stored in the phosphorescent material is sufficient to expose the film imagewise; inserting the tongue into the slot in the cassette so that the layer of phosphorescent material comes substantially into contact with the film in the cassette; leaving the tongue in the cassette for sufficient time to expose the film imagewise through the radiation emitted by the phosphorescent material, and subsequent removal of the tongue from its slot.

2. Method according to Claim 1, characterized in that at least a part of the energy from the phosphorescent material is radiated as light in the wavelength range 400 to 500 nm.

3. Method according to Claim 1 or 2, characterized in that the phosphorescent material of the said layer, when exposed imagewise, stores photoenergy but at the same time emits light in the wavelength range to which the film is sensitive, so that when the tongue is inserted into the cassette, the phosphorescent layer begins immediately to expose the film to transfer the information onto it.

4. Method according to Claim 3, characterized in that the phosphorescent material is zinc sulphide activated with copper.

5. Method according to Claim 1 or 2, characterized in that the phosphorescent material of the said layer, when exposed imagewise, stores photoenergy whereby substantially no phosphorescence of the layer is released, so that when the tongue is inserted into the cassette practically no light is emitted from the phosphorescent material, and that then, when the layer of phosphorescent material is in contact with the film, radiation of a wavelength which is longer than the longwave end of the range to which the film is sensitive is supplied to the layer of phosphorescent material to stimulate it to apply light imagewise in the wavelength range in which the film is sensitive.

6. Method according to Claim 5, characterized in that the phosphorescent material is strontium sulphide activated with cerium and samarium.

7. Method according to Claim 1 or 2, characterized in that the phosphorescent material of the said layer, when exposed imagewise, stores photo-energy but at the same time emits light in a wavelength range in which the film is substantially insensitive, and that then, when the tongue is inserted into the cassette and the layer of phosphorescent material is in contact with the film, radiation of a wavelength which is longer than the longwave end of the range to which the film is sensitive, is supplied to the layer of phosphorescent material to stimulate it, and to stimulate it to emit light imagewise in the wavelength range in which the film is sensitive.

8. Method according to Claim 7, characterized in that the phosphorescent material is sinc sulphide activated with gold.

9. Method according to one of Claims 1 to 8, characterized in that the card carrying the identification information is light transparent, and that the image-casting light is projected therethrough onto the layer with phosphorescent material to effect imagewise exposure of the layer.

10. Method according to one of Claims 1 to 8, characterized in that the card carrying identification information is light opaque or is backed to render it light opaque, and that the image-casting light is reflected from the surface of the card via a lens system onto the layer with phosphorescent material.

11. Method according to one of Claims 9 or 10, characterized in that in the layer of phosphorescent material an image of the card is stored in a dimension which deviates from the size of the card.

12. Apparatus to carry out the method according to Patent Claim 1, characterized by an exposure means which casts onto the layer of phosphorescent material an image of the identification card, and a circuit means to put the exposure means into operation.

13. Apparatus according to Claim 12, characterized in that the exposure means exposes the layer of phosphorescent material through the card.

14. Apparatus according to Claim 12, characterized in that the exposure means illuminates the surface of the card, and the light reflected from the card is formed as an image on the layer of phosphorescent material.

15. Apparatus according to one of Claims 12 to 14, characterized in that the tongue member consists of light transparent material.

16. Apparatus according to Claim 15, characterized in that the tongue member consists of light transparent polycarbonate.

17. Apparatus according to one of Claims 12 to 16, characterized in that means are provided to subject the layer of phosphorescent material to radiation of a wavelength which is longer than the longwave end of the range to which the film is sensitive.

## Revendications

1. Procédé pour l'application photographique d'informations d'identification sur une zone d'un film dans une cassette comportant une fente sur un bord pour recevoir une pièce en forme de lanquette plate et rigide, qui est revêtue d'une couche de matière phosphorescente, ladite matière phosphorescente émettant par excitation un rayonnement auquel est sensible le film dans la cassette, caractérisé par le fait qu'il comprend les stades suivants: la reproduction de l'image d'une carte, qui porte les informations d'identification, au moyen de lumière UV sur la couche phosphorescente jusqu'à ce que la photo-énergie accumulée dans la matière phosphorescente suffise à impressionner le film suivant une image, l'introduction de la languette dans la fente de la cassette de façon que la couche de matière phosphorescente vienne essentiellement en contact avec le film dans la cassette, la maintien de la languette dans la cassette pendant un temps suffisant pour impressionner le film suivant une image sous l'effet du rayonnement émis par la matière phosphorescente, et consécutivement, le retrait de la languette à partir de la fente.

2. Procédé selon la revendication 1, caractérisé par le fait qu'au moins une partie de l'énergie de la matière phosphorescente est rayonnée sous forme de lumière dans la gamme des longueurs d'onde de 400 à 500 nm.

3. Procédé selon les revendications 1 ou 2, caractérisé par le fait que la matière phosphorescente de ladite couche emmagasine une photo-énergie lorsqu'elle est exposée à la lumière suivant une image, mais qu'elle émet en même temps de la lumière dans la gamme des longueurs d'onde à laquelle le film est sensible, si bien que lorsque la languette est engagée dans la cassette, la couche phosphorescente commence immédiatement à impressionner le film pour transférer sur celui-ci des informations.

4. Procédé selon la revendication 3, caractérisé par le fait que la matière phosphorescente est du sulfure de zinc activé par le cuivre.

5. Procédé selon les revendications 1 ou 2, caractérisé par le fait que la matière phosphorescente de ladite couche emmagasine une photo-énergie lorsqu'elle est exposée à la lumière suivant une image, dans un tel cas, aucune phosphorescence de la couche n'est essentiellement déclenchée, si bien que, lorsque la languette est engagée dans la cassette, pratiquement aucune lumière n'est émise par la matière phosphorescente, et qu'ensuite, lorsque la couche de matière phosphorescente se trouve en contact avec le film, un rayonnement d'une longueur d'onde qui est plus grande que celle de la limite des grandes longueurs d'onde de la région de sensibilité du film, est dirigée sur la couche de matière phosphorescente afin de l'exciter pour l'utilisation suivant une image d'une lumière dans la gamme de longueurs d'onde à laquelle répond le film.

6. Procédé selon la revendication 5, caractérisé par le fait que la matière phosphorescente est du sulfure de strontium activé par le cérium et le samarium.

7. Procédé selon les revendications 1 ou 2, caractérisé par le fait que la matière phosphorescente de ladite couche emmagasine une photo-énergie lorsque celle-ci est exposée à la lumière suivant une image, mais qu'elle émet en même temps une lumière dans une gamme de longueurs d'onde à laquelle le film est essentiellement insensible, et qu'ensuite, lorsque la languette est engagée dans la cassette et que la couche de matière phosphorescente est en contact avec le film, on dirige sur la couche de matière phosphorescente un rayonnement d'une longueur d'onde qui est plus grande que celle de la limite des grandes longueurs d'onde de la région de sensibilité du film, afin d'exciter ladite couche en vue d'une émission suivant une image, d'une lumière dans la gamme des longueurs d'onde à laquelle est sensible le film.

8. Procédé selon la revendication 7, caractérisé par le fait que la matière phosphorescente est du sulfure de zinc activé par l'or.

9. Procédé selon l'une des revendications 1 à 8, caractérisé par le fait que la carte qui porte les informations d'identification laisse passer la lumière et que la lumière de reproduction de l'image est projetée à travers ladite carte sur la couche de matière phosphorescente pour réaliser une exposition à la lumière suivant une image, de la couche.

10. Procédé selon l'une des revendications 1 à 8, caractérisé par le fait que la carte qui porte les informations d'identification est opaque à la lumière ou revêtue d'un dépôt opaque à la lumière, et que la lumière de reproduction d'image est réfléchie par la surface de la carte au moyen d'un système de lentilles sur la couche de matière phosphorescente.

11. Procédé selon les revendications 9 ou 10, caractérisé par le fait que dans la couche de matière phosphorescente est emmagasinée une image de la carte dans une dimension différente de la grandeur de la carte.

12. Dispositif pour la mise en oeuvre du procédé selon la revendication 1, caractérisé par le fait qu'il comprend une installation d'exposition à la lumière qui projette sur la couche de matière phosphorescente une image de la carte d'identification, et un mécanisme interrupteur pour la mise en service de l'installation d'exposition à la lumière.

13. Dispositif selon la revendication 12, caractérisé par le fait que l'installation d'exposition à la lumière éclaire la couche phosphorescente à travers la carte.

14. Dispositif selon la revendication 12, caractérisé par le fait que l'installation d'exposition à la lumière éclaire la surface de la carte et que la lumière réfléchie par la carte reproduit une image sur la couche de matière phosphorescente.

15. Dispositif selon l'une des revendications 12 à 14, caractérisé par le fait que la pièce en forme de languette est constituée en matériau laissant passer la lumière.

16. Dispositif selon la revendication 15, caractérisé par le fait que la pièce en forme de languette est constituée en polycarbonate laissant passer la lumière.

17. Dispositif selon l'une des revendications 12 à 16, caractérisé par le fait qu'il est prévu un agencement pour exposer la couche de matière phosphorescente à un rayonnement d'une longueur d'onde qui est plus grande que celle de la limite des grandes longueurs d'onde de la région de sensibilité du film.

FIG.1

FIG.2

FIG.3